# EUROPEAN PATENT APPLICATION

(11) **EP 0 603 013 A1**
(43) Date of publication of application: **22.06.1994**
(21) Application number: 93310275.8
(22) Date of filing: 20.12.1993
(51) Int. Cl.: H04M 1/02

(54) **Cellular telephone handset**

(30) Priority: 18.12.1992 JP 338391/92
(71) Applicant: NEC CORPORATION, Tokyo (JP)
(72) Inventor: Imura, Minoru, c/o NEC Corporation, Tokyo (JP)
(74) Representative: Moir, Michael Christopher

(57) **Abstract**

A cellular telephone of this invention includes a housing and a rectangular parallelepiped member pivotally mounted on the housing through a support shaft disposed on one end portion of the housing. The housing incorporates a microphone or speaker. The rectangular parallelepiped member incorporates a speaker or microphone. The rectangular parallelepiped member can be pivoted, with respect to the housing, about an axis of the support shaft through an angle at which the distance between the speaker and the microphone substantially coincides with the distance between the ear and mouth of a user. The pivot angle of the rectangular parallelepiped member can be locked by a lock mechanism.

## Description

### Background of the Invention

### 1. Field of the Invention

The present invention relates to a cellular telephone and, more particularly to the structure of a compact cellular telephone. Whilst the large majority of mobile telephones operate in cellular systems, the invention is in principle applicable also to other compact mobile telephones which may not employ cellular technology, and the term cellular telephone is intended to include such other mobile telephones.

### 2. Description of the Prior Art

Recent cellular telephones are made smaller and lighter to improve their portability.

With this trend, the distance between the speaker and microphone of a telephone has decreased. For this reason, when a user positions the speaker to his/her ear in a speech communication, the microphone does not coincide with the position of his/her mouth in many instances.

With a growing trend toward smaller cellular telephones, the distance between the speaker and microphone of such a conventional cellular telephone so often does not coincide with the distance between the mouth and ear of the user in many instances, thus posing the problem of an uncomfortable speech communication.

### Summary of the Invention

The present invention has been made in consideration of the above circumstances, and has for its object to provide a compact cellular telephone having an improved structure which allows the distance between the microphone and the speaker to substantially coincide with the distance between the ear and mouth of a user.

In order to achieve the above object, according to the first aspect of the present invention, there is provided a cellular telephone comprising a housing and a rectangular parallelepiped member pivotally mounted on said housing about an axis at one end portion of said housing, wherein said housing incorporates one of a microphone and a speaker, said rectangular parallelepiped member incorporates the other of said microphone and speaker, and said rectangular parallelepiped member can be pivoted, with respect to said housing, about said axis to an angle at which a distance between said speaker and said microphone substantially matches with a distance between an ear and mouth of a user.

According to the second aspect of the present invention, there is provided a cellular telephone comprising a housing having a surface incorporating one of a speaker or a microphone and a member pivotally mounted about an axis adjacent an end of the housing remote from the speaker or microphone, said member incorporating the other of said speaker or microphone, the pivot axis of said member making a substantial angle with the surface whereby the member is pivotable between a stowed position adjacent the housing and an operative position in which the speaker and microphone are spaced from each other to suit the distance between the ear and mouth of a user.

In the first aspect, the cellular telephone is characterised in that a bottom surface of the rectangular parallelepiped member is in contact with the housing and intersects the pivot axis, and when the member is pivoted about the axis said surface describes a flat arcuate surface or a circular cone.

In addition, the cellular telephone is characterised in that the pivoted member constitutes an antenna structure as a whole, and when the member is moved from its stowed position, an OFF-hook state is set.

Furthermore, the cellular telephone is characterised by further comprising a lock mechanism capable of variably fixing the pivot angle of the member with respect to the housing.

In a preferred form the cellular telephone with the above-described aspects include a housing and a rectangular parallelepiped member pivotally mounted on the housing through a support shaft disposed on one end portion of the housing. The housing incorporates a microphone or speaker. The rectangular parallelepiped member incorporates a speaker or microphone. The rectangular parallelepiped member can be pivoted, with respect to the housing, about the axis of the support shaft through an angle at which the distance between the speaker and the microphone substantially coincides with the distance between the ear and mouth of a user. Therefore, the comfort of a user during use of the telephone can be improved.

### Brief Description of the Drawings

Fig. 1 is a schematic perspective view showing a cellular telephone according to the first embodiment of the present invention;
Fig. 2 is a schematic plane view showing a lock mechanism in an embodiment of the present invention; and
Fig. 3 is a schematic perspective view showing a cellular telephone according to the second embodiment of the present invention.

### Detailed Description of the Preferred Embodiments

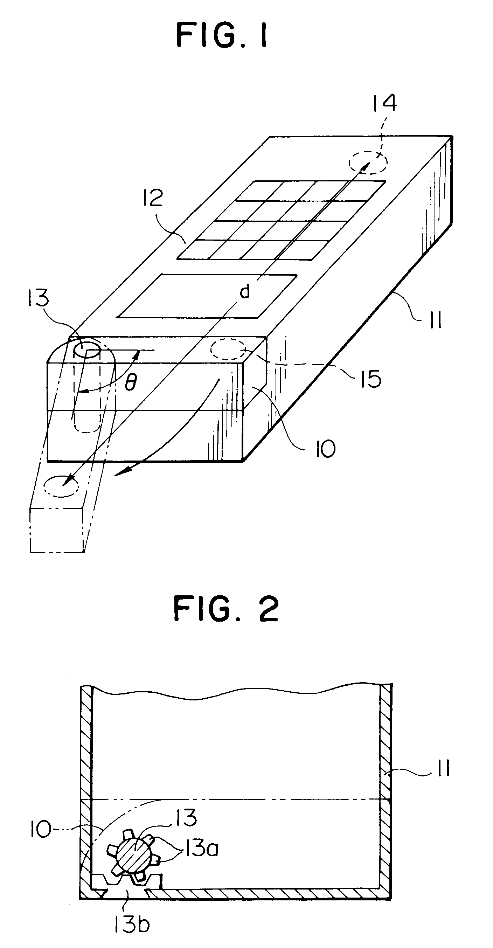

Preferred embodiments of the present invention will be described in detail below with reference to the accompanying drawings. Fig. 1 is a schematic perspective view showing a cellular telephone according to the first embodiment of the present invention.

Referring to Fig. 1, one end of a rectangular parallelepiped member 10 is fixed on one end portion of a housing 11, located on the operation surface 12 side having operating controls and a display. As can be seen from Fig. 1 the member 10 nests with the housing in a correspondingly shaped recess thereof so as to blend (conform) with the surface 12 and also with the end and sides of the housing 10. The member 10 can be pivoted about the axis of a rotating support shaft 13 away from its stowed position shown in full lines to a deployed (operative) position shown in dotted lines. When the rectangular parallelepiped member 10 is pivoted, the bottom surface of the member 10, which is in contact with the housing 11 and intersects the support shaft 13 draws a flat arcuate surface, due to the axis of the shaft 13 being perpendicular to the bottom surface, and also (since the member 10 is a rectangular parallelepiped) also to the surface 12. A microphone or speaker 14 is incorporated in the housing 11. A speaker or microphone 15 is incorporated in the other end portion of the rectangular parallelepiped member 10. The rectangular parallelepiped member 10 constitutes an antenna structure.

The pivot mechanism of the rectangular parallelepiped member 10 will be described next with reference to Fig. 2. As shown in Fig. 2, a plurality of tooth-shaped projections 1 3a are formed on the lower end of the support shaft 13 for pivotally coupling the rectangular parallelepiped member 10 to the housing 11. A lock piece 13b which can be engaged with the projections 13a is disposed at a proper portion of the housing 11 so as to be slidable in the vertical direction. When the rectangular parallelepiped member 10 is to be pivoted, the lock piece 13b is retracted to a lower position where it is not engaged with the projections 13a. When the rectangular parallelepiped member 10 is pivoted to a proper position, the lock piece 13b is moved upward to be engaged with the projections 13a and is fixed in position. With the lock mechanism for allowing the rectangular parallelepiped member 10 to be engaged/disengaged with/from the support shaft 13, the rectangular parallelepiped member 10 can be fixed at a desired pivot position.

Note that the speaker or microphone 15 is connected to an audio circuit arranged in the housing 11 via a wire extending through the support shaft 13.

A method of using the embodiment will be described next.

A user carries the cellular telephone with the rectangular parallelepiped member 10 being stored at one end portion of the housing 11, as indicated by the solid linesin Fig. 1, while he/she does not use the telephone. Assume that the housing 11 incorporates the microphone 14, and the rectangular parallelepiped member 10 incorporates the speaker 15 (and vice versa).

When the user wants to make an outgoing call, he/she pivots the rectangular parallelepiped member 10 in the direction indicated by the arrow in Fig. 1 to make a distance d between the microphone 14 and the speaker 15 substantially coincide with the distance between the mouth and ear of the user, as indicated by the broken lines in Fig. 1. Note that when the rectangular parallelepiped member 10 is pivoted away from its stowed position, the cellular telephone is automatically set in an OFF-hook state.

The user then dials the telephone number of a calleeby operating dial buttons on the operation surface 12. Since the rectangular parallelepiped member 10 constitutes an antenna, this dial signal is transmitted to a telephonestation. When the callee responds to the call, the user canperform a speech communication.

When an incoming call is received, a ringing signal is received through the antenna constituted by the rectangular parallelepiped member 10, and a ringing tone is generated from the speaker 15 of the rectangular parallelepiped member 10. When the user pivots the rectangular parallelepiped member 10 in the same manner as described above, the cellular telephone is set in an OFF-hook state. The use then can perform a speech communication with the caller by using the microphone 14 and the speaker 15.

As is apparent, if the cellular telephone is exclusively used by a single user, the telephone may be designed such that, upon pivoting the rectangular parallelepiped member 10 in this embodiment, the member 10 is locked at a pivot angle ϑ at which the distance d between the microphone and the speaker substantially coincides with the distance between the mouth and ear of this user.

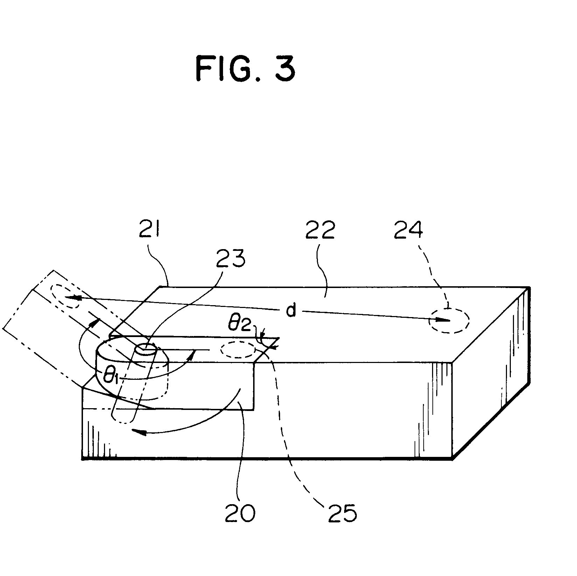

Fig. 3 is a perspective view showing a cellular telephone according to the second embodiment of the present invention. One end of a rectangular parallelepiped member 20 is fixed on one end portion, of a housing 21, located on the operation surface 22 side such that the member 20 can be pivoted about the axis of a rotating support shaft 23 between a stowed position in a recess on the side of the housing 21 to a deployed position shown in dotted lines. The shaft 23 makes a substantial angle with the surface 22, although less than the 90° angle of the Fig. 1 embodiment. From the drawing, it can be seen that the angle is 60° or more, although a smaller but still substantial angle (eg. 45°) may suffice. When the rectangular parallelepiped member 20 is pivoted, the bottom surface of the member 20, which is in contact with the housing 21 and intersects the support shaft 23 draws a circular cone. A microphone or speaker 24 is incorporated in the housing 21. A speaker or microphone 25 is incorporated in the other end portion of the rectangular parallelepiped member 20. The rectangular parallelepiped member 20 constitutes an antenna structure.

Although not shown in Fig. 3, the same lock mechanism as that described in the first embodiment is formed in the second embodiment.

A method of using the second embodiment will be described next.

A user carries the cellular telephone in that state indicated by the solid lines in Fig. 3 while he/she does not use it. Assume that the housing 21 incorporates microphone 24, and the rectangular parallelepiped member 20 incorporates the speaker 25 (and vice versa).

When the user wants to make an outgoing call, he/she pivots the rectangular parallelepiped member 20 in the direction indicated by the arrow in Fig. 3 to make a distance d between the microphone 24 and the speaker 25 substantially coincide with the distance between the distance between the mouth and ear of the user, as indicated by the broken lines in Fig. 3. Note that when the rectangular parallelepiped member 20 is pivoted, the cellular telephone is automatically set in an OFF-hook state.

The user then dials the telephone number of a calleeby operating dial buttons on the operation surface 22. Since the rectangular parallelepiped member 20 constitutes an antenna, this dial signal is transmitted to a telephonestation. When the callee responds to the call, the user canperform a speech communication.

Upon receiving an incoming call, a ringing signal is received through the antenna constituted by the rectangular parallelepiped member 20, and a ringing tone is generated from the speaker 25 of the rectangular parallelepiped member20. When the user pivots the rectangular parallelepiped member 20 in the same manner as described above, the cellular telephone is set in an OFF-hook state. The use then can perform a speech communication with the caller byusing the microphone 24 and the speaker 25.

As is apparent, if the cellular telephone is exclusively used by a single user, the telephone may be designed such that, upon pivoting the rectangular parallelepiped member 20 in the second embodiment, the member 20 is locked at a pivot angle ϑ₁ at which the distance d between the microphone and the speaker substantially coincides with the distance between the mouth and ear of the user.

In the second embodiment, an angle defined between an end face, of the rectangular parallelepiped member 20, located on the opposite side to the support shaft 23 and an inner longitudinal side face of the rectangular parallelpiped member 20 is anobtuse angle ϑ₂.

## Claims

1. A cellular telephone comprising a housing and a rectangular parallelepiped member pivotally mounted on said housing about an axis at one end portion of said housing, wherein said housing incorporates one of a microphone and a speaker, said rectangular parallelepiped member incorporates the other of said microphone and speaker, and said rectangular parallelepiped member can be pivoted, with respect to said housing, about said axis to an angle at which a distance between said speaker and said microphone substantially matches with a distance between an ear and mouth of a user.

2. A telephone according to Claim 1 or Claim 2, wherein a bottom surface, of said rectangular parallelepiped member, which is in contact with said housing and crosses said support shaft is pivoted about the axis of said support shaft so as to draw a flat arcuated surface.

3. A telephone according to Claim 1, wherein a bottom surface of said rectangular parallelepiped member is in contact with said housing and intersects the pivot axis, so that when the member is pivoted about the axis said surface describes a circular cone.

4. A cellular telephone comprising a housing having a surface incorporating one of a speaker or a microphone and a member pivotally mounted about an axis adjacent an end of the housing remote from the speaker or microphone, said member incorporating the other of said speaker or microphone, the pivot axis of said member making a substantial angle with the surface whereby the member is pivotable between a stowed position adjacent the housing and an operative position in which the speaker and microphone are spaced from each other to suit the distance between the ear and mouth of a user.

5. A telephone as claimed in Claim 4, wherein in its stowed position the member conforms with the shape of the housing.

6. A telephone as claimed in Claim 4 or 5, wherein the member when stowed nests in a recess in the housing.

7. A telephone as claimed in Claim 4, 5 or 6, wherein the surface also incorporates operating controls and/or a display.

8. A telephone according to any one of Claims 1 to 7, wherein said member constitutes an antenna structure.

9. A telephone according to any one of Claims 1 to 8, wherein when said member is pivoted from its stowed position an OFF-hook state is set.

10. A telephone according to any preceding claim, further comprising a lock mechanism capable of variably fixing a pivot angle of said member with respect to said housing.
